# EUROPEAN PATENT SPECIFICATION

(11) **EP 4 409 926 B1**
(45) Date of publication and mention of the grant of the patent: **12.11.2025**
(21) Application number: 21786384.4
(22) Date of filing: 29.09.2021
(51) Int. Cl.: H04Q 9/00, G06Q 10/06, G08B 21/10, G06Q 40/08, G06Q 10/0635, G06Q 10/10, G06Q 30/0201, G06Q 50/16, G08B 19/00, G08B 25/01, G08B 29/20

(54) **MEASURING AND CONTROL SYSTEM MEASURING SMART HOME PERILS**
MESS- UND STEUERSYSTEM MIT INTELLIGENTEN HEIMPERILS
SYSTÈME DE MESURE ET DE COMMANDE MESURANT DES RISQUES D'UNE MAISON INTELLIGENTE

(43) Date of publication of application: 07.08.2024
(73) Proprietor: Swiss Reinsurance Company Ltd., 8022 Zürich (CH)
(72) Inventor: SPÖRRI, Martin, 8022 Zürich (CH)
(74) Representative: Leimgruber, Fabian Alfred Rupert
(86) International application number: PCT/EP2021/076808
(87) International publication number: WO 2023/051904

(56) References cited:
- US-A1- 2018 114 272
- US-A1- 2018 158 147
- US-A1- 2021 248 289
- US-B1- 10 497 250

## Description

### Field of the Invention

The present invention relates to smart home measuring and control systems, in particular to measuring systems for sensor-based measuring of sensor equipped smart home perils by corresponding measuring parameters and smart home control systems reacting on the measured sensory measuring parameter values. More particularly, the invention relates to smart home measuring and/or control devices or systems comprising a plurality of measuring sensors or measuring devices enabled to capture and trace measuring parameters and reacting on the measured parameter values by controlling (e.g. turn on/off or activate or steer or operate) a variety of connected electronic devices, electronic alarm systems or other electronically operated systems or devices, as connected automated systems, and the like. In general, it relates to automated measuring and signaling systems and methods for providing peril measures in the context of smart homes and occurrences and impacts of peril events, such as natural catastrophes perils e.g. earthquake, windstorm, flood and/or weather perils; property perils e.g. perils related to neighborhood, family composition and/or building structure; life-related recognizable patterns e.g. perils related to routine, activity/inactivity, expected events and/or changes/forecast; home perils e.g. fire, water, wind, theft, cyber perils etc.

### Background of the Invention

Smart home or smart house technology and home automation are already wide spread in the art, where the terms smart home or home automation denote building automation and/or monitoring of properties or homes. A home automation system is typically enabled to monitor and/or control home attributes such as lighting, climate, entertainment systems, and appliances. It can also include home security such as access control and alarm systems. When connected with the Internet, home devices are an important constituent of the Internet of Things ("IoT"). A home automation system typically connects controlled devices to a central hub or "gateway". The user interface for control of the system can e.g. use wall-mounted terminals, tablet or desktop computers, a mobile phone application, or a Web interface that may also be accessible off-site through the Internet. However, there are issues with the current state of home automation including a lack of standardized security measures and deprecation of older devices without backwards compatibility. Home automation has high potential for sharing data between trusted individuals for personal security and can comprise energy saving measures with a positive environmental impact.

In the technical field, smart homes typically constitute a branch of automation and ubiquitous computing that involves incorporating smartness into dwellings for comfort, healthcare, safety, security, and energy conservation. Remote monitoring systems are common components of smart homes, which use telecommunication and web technologies to provide remote home control and support patients remotely from specialized assistance centers. Smart homes may offer a better quality of life by introducing automated appliance control and assistive services. The smart home technology is able to optimize user comfort by using context awareness and predefined constraints based on the conditions of the home environment. A user can control home appliances and devices remotely, which enables him or her to execute tasks before arriving home. Ambient intelligence systems, which monitor smart homes, sometimes optimize the household's electricity usage. Smart homes enhance traditional security and safety mechanisms by using intelligent monitoring and access control.

The most recent smart home technologies also include wearable and implantable devices and assistive robots. Location awareness is an important prerequisite to create an intelligent environment in smart homes and allow the system to react on life patterns of different users of a property. Several taxonomies of the location detection system are known in the location detection techniques. The properties of location detection systems may be classified according to physical position, symbolic location, and absolute and relative measurements. Issues related to accuracy, precision, measurement scale, and cost can also be incorporated in the different location systems. The smart home systems may be enabled to object tracking as well as tracking people.

Thus, smart home technology comprises the application of ubiquitous or pervasive computing or other technological environment. As such, the smart home technology is one part of developing a smart city. However, in addition to basic controls of home appliances and lamps, it is also an important issue in a smart home to perform controls corresponding to different property users, in particular family members, because different property users generally have different requirements. However, when multiple different events are detected, the systems are typically not able to identify the relationship between the multiple different events and actively give a suggestion to deal with the related events together, so that e.g. the performance or security of the smart home could be further improved.

To cover possible perils, homeowner and personal property insurance exists providing coverage and protection against damage to the home and personal property owner by the policyholder, respectively. There are many potential sources of damage to homes and personal property, some of which can be detected far enough in advance to take an action that may mitigate or prevent damage from occurring. Currently, many appliances and other goods are capable of communicating information about their operation via mesh networks as part of the "internet of things." However, there is no way to aggregate and analyze all of this communicated data to measure individual perils associated with a property, and further manage and reduce the risks for a loss impact associated with risk-transfer-related events.

The machine-based measuring of measure factors of perils, or forecast of such factors, i.e. of occurrence probabilities for events associated with a property or home and causing loss impacts, e.g. occurring property perils or risks, is technically difficult to be realized, inter alia, because of their long-tail nature and their susceptibility to measuring and parametrizing quantitatively the multitude of impact factors and to capturing temporal time developments and parameter fluctuations. Automation of measuring, prediction and modeling of property perils and risk accumulation is especially challenging as there is typically limited historic individual loss data available, and new peril events with new characteristics keep emerging. It is therefore important to reduce the reliance on historic data by using forward-looking modelling (FLM) techniques. It is to be noted that FLM techniques can typically not trivially be applied to a specific technical problem, thus going beyond traditional data analysis and predictive modeling approaches and techniques by acknowledging a structured cause-effect chain. Property risk driven systems have been developed and used as forecasting systems based on risk values. Such prior art systems are able to predictively and quantitatively measure expected losses starting from a set of peril scenarios, i.e. parametrization of such scenarios, assessing the impact of key risk factors, and evaluate the effect of risk transfer parameters and conditions. The results of such forecast systems can be back tested against actually measured loss data wherever available and relevant. With peril-triggered products, such as risk-transfer, this is not the case. The coverage of the probably occurring event impact must be set/assessed in advance. If the actual occurring (not the forecasted occurring) of peril events and associated impact (inter alia: the associated loss) is greater than the cover or risk mitigation measures, as e.g. the amount of transferred resources, typically premiums collected, then a risk transfer or insurance system's operability will be corrupted. A precise, reliable, forward-looking and reproducible peril/risk measurement, prediction and assessment is therefore vital to all risk-triggered systems and processes. Hence, the ability to forecast and set assumptions for the expected losses is critical to the operation. The present invention was developed inter alia for measuring, optimized triggering, identifying, assessing, forward-looking modeling and measuring of property risk driven exposures and to give the technical basics to provide a fully automated pricing device for property/home exposure comprising self-adapting and self-optimizing means based upon varying property/home risk drivers.

In the prior art, US 10497250 B1 shows a machine-learning-based systems for detecting damage and/or other conditions associated with a building, or land-structure using a property monitoring system. The property monitoring system is used in conjunction with machine learning techniques to determine or predict various conditions associated with the property, including damage thereto, based upon dynamic characteristic data obtained via on-site sensors, static characteristic data and/or third-party input descriptive of an event impacting the building. Accordingly, damage and/or loss associated with the building/real property can be ascertained so that suitable mitigation techniques can be applied. Further, the document US 2021/248289 A1 shows a system to generate and deploy digital risk twin structures. The system allows to select object elements stored in a storage of the system and assemble the selected object elements. A plurality of sensors measures at least one parameter out of structural parameters, operational parameters, and environ-mental status parameters, where the at least one parameter is associated with a physical object represented by the assembled object elements. The assembled object elements include data structure representing states of sub-systems of the physical object, and the data structure holds a value of the at least one parameter. US 2018/114272 A1 discloses an automated, inter-arrival-time-based system for automated prediction and exposure-signaling of associated, catastrophic risk-event triggered systems. Risk-events are measured and assigned to a historic hazard set comprising event parameters for each assigned risk-event. The automated risk-transfer systems are provided with risk-transfer parameters for automated loss cover. An event loss set is based on the measured frequencies with associated losses of said risk-events of the hazard set, each of said risk-events creating a set specific loss. Timestamps, based on an estimated distribution of corresponding inter-arrival times parameters, capture a waiting time between consecutive events of the period loss set. The waiting times measure the time intervals between two successive risk-events and capture peril specific temporal clustering and/or seasonal occurrence patterns. Finally, US 2018/158147 A1 discloses a system for modelling multi-peril catastrophe. A data server generates a first dataset by capturing and analyzed data based on a plurality of perils. The server generates a second dataset by retrieving from memory synthetically generated data based on the perils. A computational graph service allows to retrieve the first dataset and second dataset from the data server and allows to perform graph analysis on the first dataset and second dataset to find links amongst the plurality of perils.

### Summary of the Invention

It is an object of the invention to provide and measure a safety score for a household, including a breakdown into various perils and covered categories. It should be based a technical representation of a home (Home Object) or property including its contents and should be able to return a safety score including breakdowns into individual perils and covers. Further it should allow for systematic capturing, measuring, quantifying, and forward-looking generating of appropriate peril and peril accumulation measures. It is also an object of the invention to provide an automated property peril/risk driven system for automated optimization and adaption in signaling generation by triggering risk exposure of insurance-covered objects. In particular, it is an object of the present invention to provide a system which is better able to capture the external and/or internal factors that affect property/home exposure, while keeping the used trigger techniques transparent. Moreover, the system should be better able to capture how and where risk is transferred, which will create a more efficient and correct use of risk and loss drivers in property risk-transfer technology systems. Furthermore, it is an object of the invention to provide an adaptive pricing tool for insurance products based upon home/property exposure. This approach differs from traditional ones in that the prior art methods rely on underwriting experts to hypothesize the most important characteristics and key factors from the environment and property that impact property/home peril exposure. Thus, the present invention should be enabled, inter alia, to detect and alleviate the foregoing risks, such as the risk of home damage, personal property damage, insurance claims, and/or other risks.

According to the present invention, these objects are achieved particularly through the features of the independent claims. In addition, further advantageous embodiments follow from the dependent claims and the description.

According to the present invention, the abovementioned objects are particularly achieved by the measuring and control system measuring and providing a multitude of peril measures associated with a property, in particular with sensory monitored properties as smart homes, in that the measuring and control system comprises at least one hardware controller and a plurality of sensory devices, the property being populated with the sensory devices and the at least one hardware controller being in communication with the plurality of sensory devices, the sensory devices transmitting sensory signals to the hardware controller, in that the measuring and control system comprises a digital raw layer for capturing raw sampling signals comprising at least sensory data of the sensory devices and physical condition data measuring real world physical conditions related to the property wherein the measuring and control system comprises a signal conditioning circuitry for processing the captured raw sampling signals into convertible digital values and wherein the digital raw layer provides secure retrieval of the measured and/or captured convertible digital values, in that the measuring and control system comprises a calibration layer with an abstract digital representation of the property, the calibration layer comprising a first calibration structure modelling static properties parameters related to the property based on the abstract digital representation and the captured digital values of the digital raw layer, a second calibration structure modeling dynamic properties based on the abstract digital representation and the captured digital values of the digital raw layer, and a third calibration structure modeling lifestyle behavior and characteristics of the users of the property based on the abstract digital representation and the captured digital values of the digital raw layer, and in that the control system comprises a peril indexing layer splitting the perils to be measured into various individual perils comprising at least natural catastrophes and/or property perils and/or life pattern perils and/or home perils, and generating an individual safety score measure for each of the individual perils, the individual safety score measures providing indexing measures measuring the respective physical peril linked to the property. The captured raw sampling signals can e.g. comprise at least sensory data transmitted to the hardware controller from the sensory devices associated with the property and/or property condition data and/or perils-related condition data and/or natural catastrophe related sensory data and/or weather/air related sensory data and/or crime related monitoring data, wherein the raw sampling signals measure real world physical conditions related to the property and wherein the measuring and control system comprises a signal conditioning circuitry for processing the captured raw sampling signals into convertible digital values and providing secure retrieval of digital values. The captured raw sampling signals can further e.g. comprise measuring parameters measuring the occurrence of natural catastrophes events at least comprising earthquake measuring parameters and/or windstorm measuring parameters and/or flood measuring parameters and/or weather measuring parameters. The captured raw sampling signals can e.g. comprise measuring parameters measuring the occurrence of property perils events in dependence to neighborhood characteristics parameters and/or family composition characteristics parameters and/or building structure characteristics parameters. The captured raw sampling signals can e.g. comprise measuring parameters measuring the occurrence of perils associated with life patterns in dependence to routines characteristics parameters and/or activity/inactivity parameters and/or expected social event parameters and/or social change/forecast parameters. The captured raw sampling signals can e.g. comprise measuring parameters measuring the occurrence of home perils, the home perils being at least comprising measuring parameters related to fire perils and/or measuring parameters related to water perils and/or measuring parameters related to wind perils and/or measuring parameters related to theft perils. Finally, the captured raw sampling signals can e.g. comprise measuring parameters measuring the occurrence of smart home perils, the smart home perils being at least related to sensor-related perils and/or actuator-related perils and/or cyber perils.

In an embodiment variant, the measuring and control system can e.g. comprise at least one processor for receiving over the communication of the hardware controller, by the at least one processor, a plurality of communications sent from a plurality of Internet-of-Things (lo T) devices on a network, the loT-devices comprise at least the plurality of sensory devices, wherein each communication describe operations of a respective loT device, wherein, by the at least one processor, based on the plurality of communications, a model structure of an operational state for at least one of the plurality of loT-devices is determined, wherein, by the at least one processor, an operational deviation of the at least one loT-device compared to the model structure is measured, and wherein, in response, an adaption of a raw sampling measuring parameter of the digital raw layer based on the operational deviation of the at least one loT device is conducted. The presence of a new loT device can e.g. be automatically detected and added to the network, wherein, by the at least one processor, the model structure is modified based on the presence of the new loT device on the network.

In another embodiment variant, the individual safety score measures of the peril indexing layer can e.g. be dynamically adapted by means of the measuring and control system.

In a further embodiment variant, the peril indexing layer can e.g. comprise representation and/or monitoring means grouping individual safety score measures and alerts monitoring, wherein the monitoring at least comprises environmental perils related individual safety score measures and alerts and/or property perils related individual safety score measures and alerts and/or life-style associated perils related individual safety score measures and/or cyber-perils related individual safety score measures and alerts.

In an embodiment variant, the raw sampling signals can e.g. comprise at least condition data capturing risk-transfer conditions related to peril coverage parameters and/or peril exclusion parameters and/or deductibles parameters and/or claim parameters and/or time period of coverage parameters. For example, by means of the at least one processor, the operational deviation of the at least one loT device is compared to the model structure of an operational state, and, in response, at least one cost parameter value comprised in the peril coverage parameters is determined based on the operational deviation of the at least one loT device, wherein the at least one cost parameter value relates to monetary premium parameters for conducting a risk-transfer for the peril coverage. By means of the at least one processor, a risk-transfer policy can e.g. be automatically based on the cost parameter value and a premium parameter value to be transferred in response to the operational deviation. Further, by means of the at least one processor, a signal can e.g. be transmitted to transfer a value related to the premium parameter value to an account that is associated with the coverage.

The presence of a new loT device can e.g. be automatically detected and added to the network, wherein, by the at least one processor, the model structure is modified based on the presence of the new loT device on the network. By means of the at least one processor, the risk-transfer policy can e.g. be automatically modified based on the presence of the new loT device on the network.

In another embodiment variant, the measuring and control system can e.g. comprise a machine learning (ML) module, wherein the individual safety score measure for the life pattern perils is generated the step of pattern recognition of life patterns associated with measuring parameters of the captured raw sampling signals measuring comprising routines characteristics parameters and/or activity/inactivity parameters and/or expected social event parameters and/or social change/forecast parameters, and linking said life patterns to an individual safety score value by means of the machine learning (ML) module. The machine learning (ML) module can e.g. comprise at least one artificial intelligence (AI) unit. Further, the pattern recognition of life patterns can e.g. comprise a first step of clustering measured life patterns and assigning a value to the individual safety score associated with the life pattern perils based on a second step of classifying the measured and recognized clusters.

The inventive measuring and monitoring system and method has, inter alia, the advantage, that it provides and measures a total home risk index measure, but also to measure a safety score for a household, including a breakdown into various perils and covered categories. The system relies on an technical representation of a home (Home Object) including its contents and returns a safety score measure including breakdowns into individual perils and covers. The systems inventive forward-looking model structure has further the advantage to allow for a most accurate measurement and prediction of future peril impact probabilities, for example, the characteristics of measured future losses, by reflecting the mechanics, building structures and processes that drive them by the technical structure of the invention. The system further allows to be validated and trained through an understanding of historical experience, which forms a subset of what the system's modelling can predict. This has also the advantage, that it technically allows the system's measurements and predictions to be applied in situations with and without relevant historical experience, which is not possible by the known prior art systems. The inventive measuring and forward-looking prediction structure also go beyond traditional smart home systems' approach by being based on a structured cause-effect chain depending on real world measuring parameters.

### Brief Description of the Drawings

The present invention will be explained in more detail below relying on examples and with reference to these drawings in which:

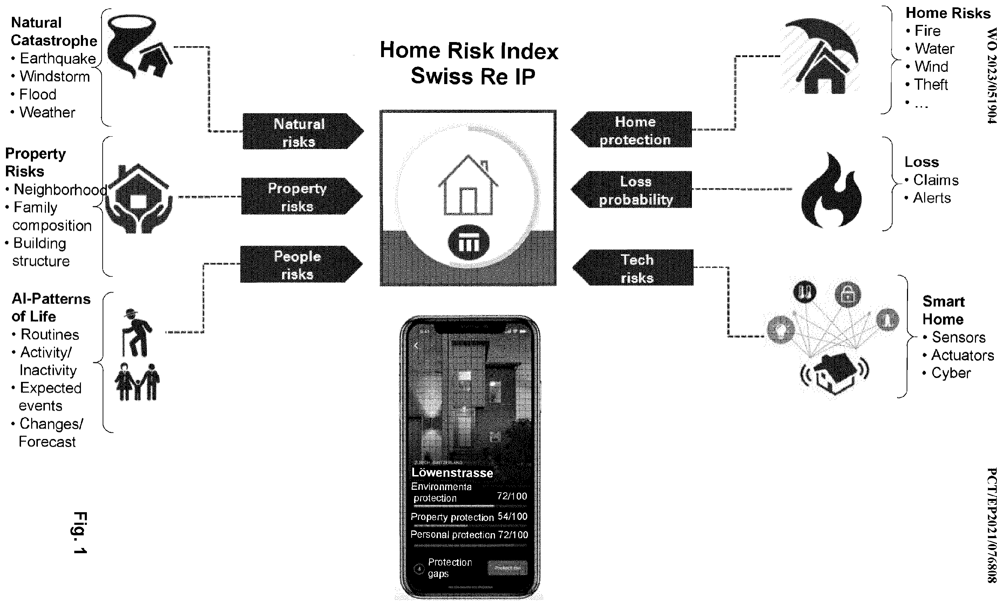

Figure 1 shows a block diagram, schematically illustrating a measuring and control system, according to the invention, measuring a plurality of smart home perils by mutual calibrated measuring parameter values and providing a peril-based smart home control system. The system provides a safety score for a household, including a breakdown into various perils and covered categories. It is based on an abstract representation of a home (Home Object) including its contents and returns a safety score including breakdowns into individual perils and covers.

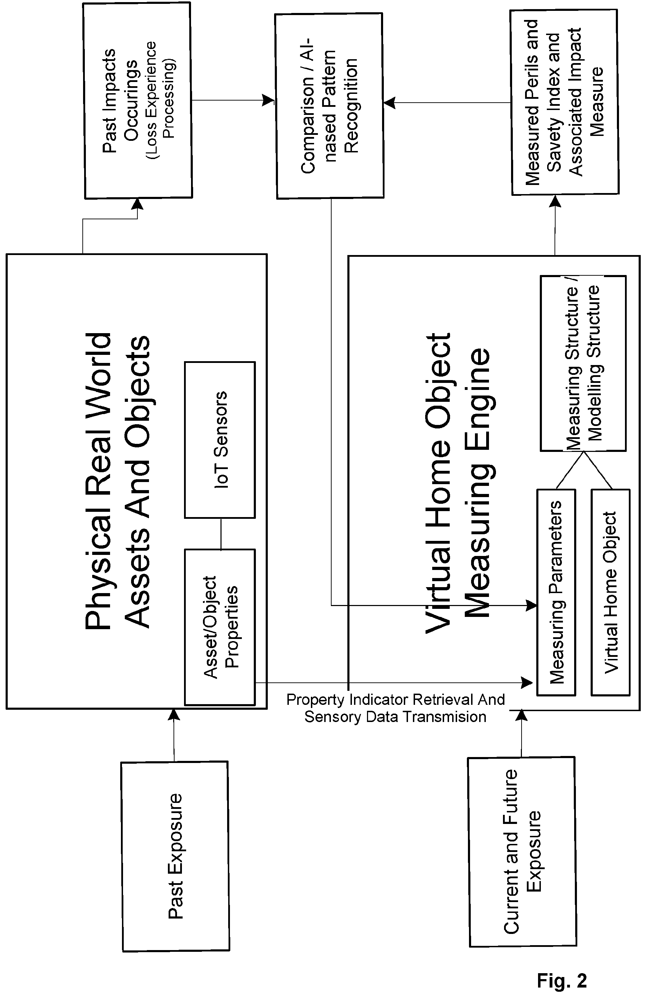

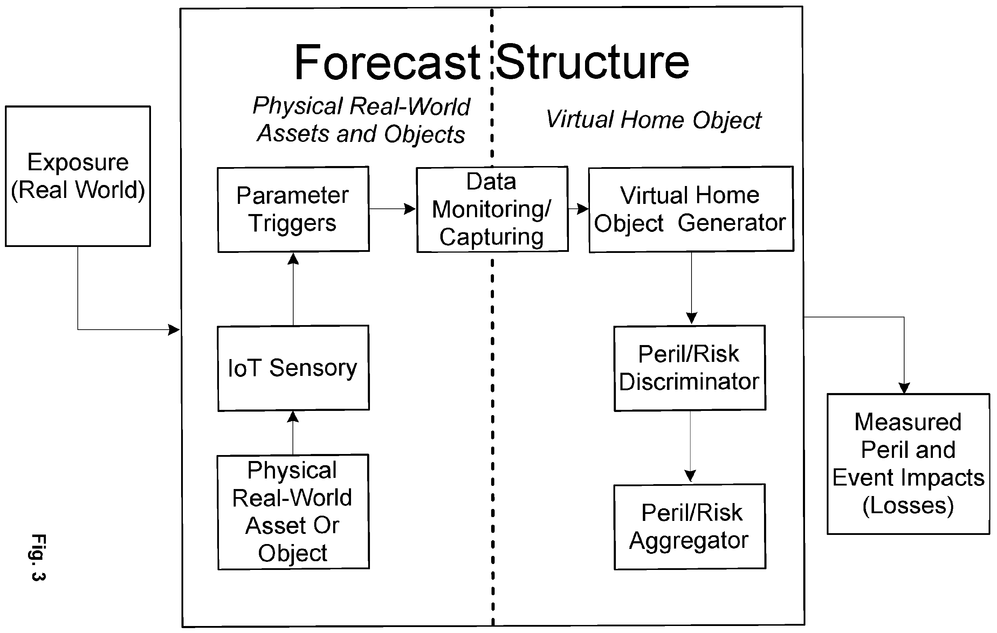

Figures 2 and 3 show block diagrams, schematically illustrating the basic structure comprising three main parts: the predicting digital home object structure, the properties indicator retrieval and the impact experience processing. The virtual home object structure allows to measure and forecast quantitative peril/risk measures and expected impact/loss measures from the physical property/asset/smart home using characteristic technical main elements, namely the digital home object structure with the simulation and synchronization means and the loT sensory providing the constant real-world streaming linkage and connection (c.f. figure 1).

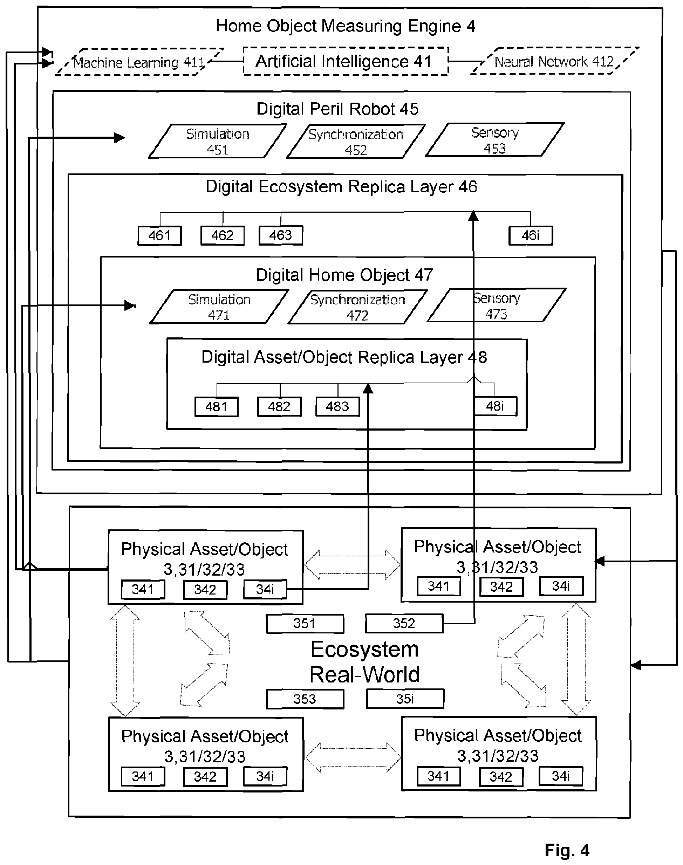

Figure 4 shows a block diagram illustrating schematically an exemplary digital home object, which can be made available throughout the entire lifecycle of the real-world asset 31/32 or object 33 and/or digital platform 1 through its structure, as shown in Fig. 4. Figure 4 shows the digital asset/object replica 48, the digital home object 47, the digital ecosystem replica 46, the digital peril/risk robot 45 and the safety index measuring engine 4 with its optional artificial intelligence 45 of a physical entity 3 in the inventive digital platform 1.

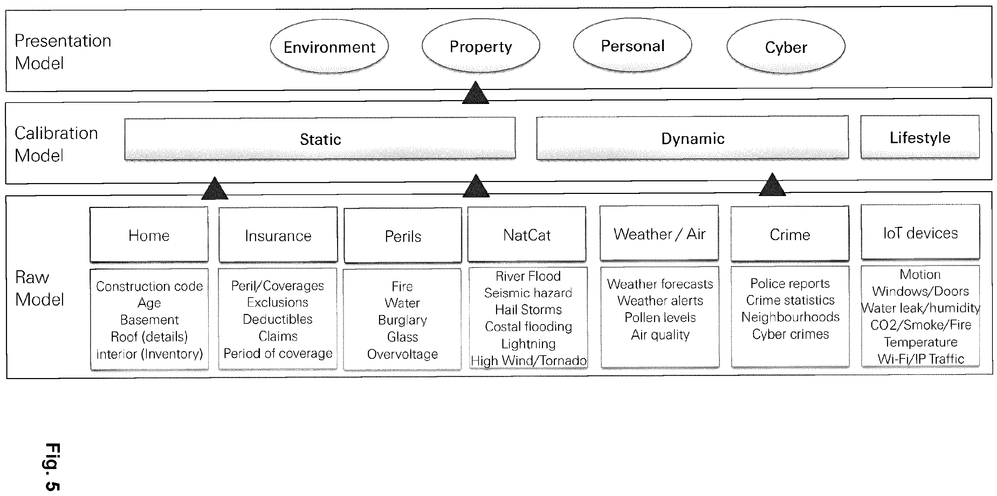

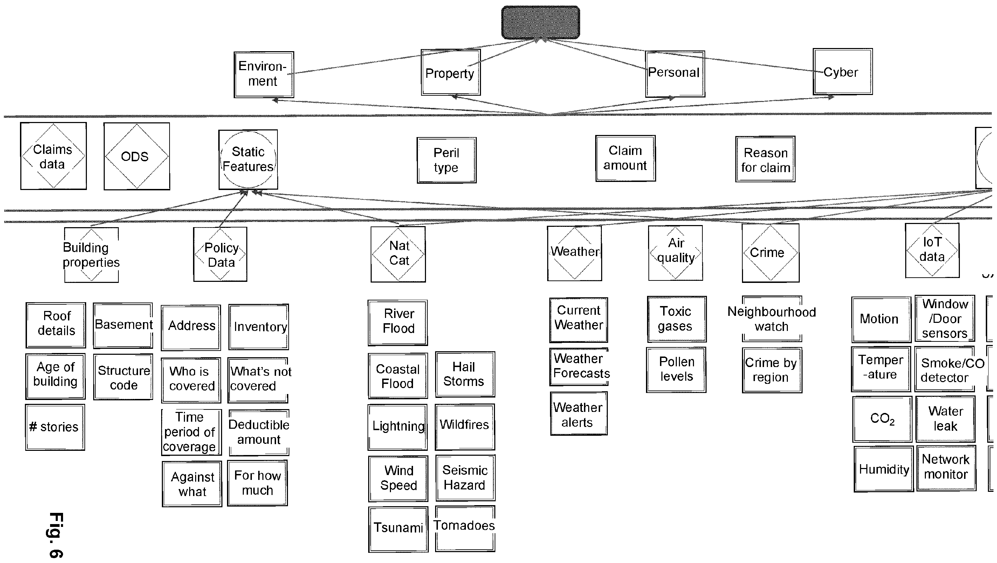

Figure 5 and 6 show block diagrams illustrating schematically an exemplary structure comprising a digital raw layer, a calibration layer and a peril indexing layer providing together the digital smart home peril robot 45.

### Detailed Description of the Preferred Embodiments

Figures 1-6 schematically illustrate an architecture for a possible implementation of an embodiment of the inventive index measuring system 1 for peril and safety score measurements of temporally or permanently evolving risk-based real-world measuring parameters. The measuring and control system 1 measures and provides a multitude of peril measures associated with a sensor equipped and sensor monitored property, in particular with sensory monitored properties as smart homes.

The measuring and control system 1 comprises at least one hardware controller and a plurality of sensory devices, the property being populated with the sensory devices and the at least one hardware controller being in communication with the plurality of sensory devices, the sensory devices transmitting sensory signals to the hardware controller. The sensors can include smart sensors as the invisible network meshing sensory data together. The sensors can e.g. comprise movement sensors and/or light sensors and/or temperature sensors etc. The sensors can e.g. be operated by and transmit data using Zigbee, Z-Wave, Bluetooth, Wi-Fi and the like.. Further, the sensors may be connected wired or wireless and can e.g.. have a battery-powered or wired power supply. The smart home can e.g. be a hub-based smart home, using SmartThings, HomeKit, Google Assistant or Alexa etc. to tie the sensors together, where sensors can be associated with electronic control, triggering routines and home automations by sensing human presence. For the communication, loT can e.g. be used for the smart home protocols, where Internet of Things (IoT) is a communication structure that connects devices and objects in order to harvest and process data produced by several edge devices. Industrial loT devices can e.g. be used for sensing, tracking, and controlling using low-power, wide area network (LP-WAN). The used LP-WAN technologies can e.g. comprise: Long range (LoRa), Sigfox, narrow-band loT (NB-loT), LTE-machine type communication (LTE-M), extended coverage global system for mobile communication (EC-GSM), random phase multiple access (RPMA), my-things (MIOTY), and DASH7. Wherein, LoRa, Sigfox, RPMA, MIOTY uses the unlicensed spectrum and others are based on cellular licensed spectrum. The proposed LP-WAN technologies have inter alia the advantage (i) that they are able to cover wide area providing long distance communication, and (ii) that devices consume very low power, (iii)of having a low data rate, and (iv) of providing low deployment cost. For realizing the inventive remote smart home (SH) monitoring system, the system can e.g. comprise smart loT sensors network to sense, transmission, and control the home environment, supplies, and instruments. The devices should consume low power and the network provider have to cover longer area to support remote monitoring. The existing short-range wireless technologies, mentioned above, such as ZigBee, RFID, Wi-Fi, and Bluetooth low energy (BLE) are not suitable for embodiment variants where long range communication is required even though they consume very low power. Moreover, the conventional cellular networks consume large amount of power for large coverage area and higher manufacturing cost. Therefore, to support remote control and monitoring of SH equipment among the other LP-WAN technologies LoRa can e.g. be suitable in terms of both long range and low power consumption as the channel throughput requirement is reasonably low for this system.

For the inventive system, e.g. am Al-based dataflow design for LoRa-enabled SH loT system can be used. A Sense HAT is e.g. an add-on board for a Raspberry Pi. The board allows to make measurements of temperature, humidity, pressure, and orientation, and to output information using a built-in LED matrix. Hence, this board can be used along with other gas, dust, stored energy, noise sensors, and other SH appliances to the network. These smart sensors can produce vast amount of data that are sent to cloud and data server through LoRa gateway for further processing with AI. As an embodiment variant, the physical layer LP-WAN technology can e.g. modulate the signal in sub-GHz Industrial, Scientific, and Medical (ISM) frequency band. A bidirectional communication can e.g. be provided by a special chirp spread spectrum technique. At the medium access control layer, an ALOHA scheme can e.g. be used that is combined with the LoRa physical layer. This enables multiple device to communicate simultaneously using different spreading factors. Therefore, no extra signaling overhead is required to hop any end users. End devices can e.g. be linked with the LoRa access point via a backhaul to network server that suppresses duplicate receptions, adapts radio access links, and forwards data to suitable application servers. An application server can then e.g. process the received data and perform as user requests to the server. The bandwidth requirement for this technology can e.g. be chosen quite flexible and can be varied in 7.8-500 kHz range. The battery lifetime can thus be more than 10 years. The embodiment variant with the LoRa can cover up to 15 km in suburban area and up to 5 km in urban area.

The next task can e.g. be building an accurate machine learning structure by using those vast amount of loTs' data for predictive maintenance, enhanced security, voice controlled appliances etc., using such loT and big data platforms. Related to the specific embodiment variant, various tasks that can be performed additionally in the proposed AI powered SH system as e.g.: (i) Predictive maintenance, by using data analytics of service equipment possibility of failure or damage prediction. That can e.g. be used to mitigate unplanned damage; (ii) Maximum efficiency, as the Al-based loT system can learn house owners' behavior and automatically modify settings to provide residents with maximum comfort and efficiency. As a further embodiment variant, these systems can notify users about any vulnerable situations; (iii) Improving security, as the Al-based face and key recognition system helps to make door lock security in home automation; (iv) Enhancing services, as natural language processing based on AI can e.g. help the loT devices and home appliances to control with voices.

For the loT communication, for example, an loT stack can be used as the combination of four main components: the physical layer, the loT platform, the communication protocols/technologies and the application layer. Thus, this is different to the Open Systems Interconnection (OSI) layer model of the prior art being based on 7 layers. In an alternative embodiment variant, the architecture can be based on three main layers (instead of the 7 OSI layers): the perception layer, the network layer, and the application layer. Following these inventive approaches, the network layer is an important part for the inventive system in which several protocols and communication technologies are handled as well as the security and privacy aspects of each of the selected domains. Depending on the embodiment variant, there are different ways in which devices can be connected to each other on the wireless domain including e.g.: (i) Centralized or star: There is central node of hub which is the responsible one for managing communications with other nodes of the network and the outside; or (ii) Decentralized or fully connected: All nodes are connected to other network nodes. This kind of topology may not be efficient for embodiment variants where the network is bigger, because the communication effort grows exponential with the number. As middle ground between the topologies above a mesh topology can e.g. be realized, in which several nodes are able to communicate with each other through the communication between intermediary nodes. According to the invention, the mesh network may include other topologies such as: (i) Ring: All nodes make a loop in which each node is connected to two nodes. The information goes through each node until it reaches the destination node; (ii) Bus: All nodes are connected to a backbone and communications and messages go through it in which all nodes receive all messages. If the backbone cable fails, all networks fail; and (iii) Line or point-to-point: This is the simplest network topology consisting of the connection between two endpoints.

The measuring and control system comprises a digital raw layer for capturing raw sampling signals comprising at least sensory data of the sensory devices and physical condition data measuring real world physical conditions related to the property wherein the measuring and control system comprises a signal conditioning circuitry for processing the captured raw sampling signals into convertible digital values and wherein the digital raw layer provides secure retrieval of the measured and/or captured convertible digital values,

The measuring and control system 1 comprises a calibration layer with an abstract digital representation 47 of the property. The digital representation 47 of the property/smart home can be realized as a twinned digital home object 47 together with a twinned digital ecosystem 46 and a twinned digital peril representation 45. The calibration layer comprising a first calibration structure modelling static properties parameters related to the property based on the abstract digital representation and the captured digital values of the digital raw layer, a second calibration structure modeling dynamic properties based on the abstract digital representation and the captured digital values of the digital raw layer, and a third calibration structure modeling lifestyle behavior and characteristics of the users of the property based on the abstract digital representation and the captured digital values of the digital raw layer.

The control system 1 comprises a peril indexing layer splitting the perils to be measured into various individual perils comprising at least natural catastrophes and/or property perils and/or life pattern perils and/or home perils, and generating an individual safety score measure for each of the individual perils, the individual safety score measures providing indexing measures measuring the respective physical peril linked to the property. The captured raw sampling signals can e.g. comprise at least sensory data transmitted to the hardware controller from the sensory devices associated with the property and/or property condition data and/or perils-related condition data and/or natural catastrophe related sensory data and/or weather/air related sensory data and/or crime related monitoring data, wherein the raw sampling signals measure real world physical conditions related to the property and wherein the measuring and control system comprises a signal conditioning circuitry for processing the captured raw sampling signals into convertible digital values and providing secure retrieval of digital values.

The home automation respectively the property/smart home sensory can e.g. comprise (i) Heating, ventilation and air conditioning (HVAC) systems, e.g. a remote control of all home energy monitors over the internet incorporating a or more user interface; (ii) Lighting control system, i.e. a smart network that incorporates communication between various lighting system inputs and outputs, using one or more central computing devices; (iii) Occupancy-aware control system to sense the occupancy of the home using smart meters and environmental sensors like CO₂ sensors, which can be integrated into the building automation system to trigger automatic responses for energy efficiency and building comfort applications; (iv) Appliance control and integration with the smart grid and a smart meter, taking advantage, for instance, of high solar panel output in the middle of the day to run washing machines; (v) Home robots and security, e.g. a household security system integrated with a home automation system can provide additional services such as remote surveillance of security cameras over the Internet, or access control and central locking of all perimeter doors and windows; (vi) Leak detection, smoke and CO detectors; (vii) Indoor positioning systems (IPS); (viii) Home automation for the elderly and disabled; (ix) Pet and/or baby care systems, for example tracking the pets and babies' movements and controlling pet access rights; (x) Air quality control systems. For example, Air Quality Egg is used by people at home to monitor the air quality and pollution level in the city and create a map of the pollution; (xi) Smart kitchen and connected cooking systems; (xii) Voice control devices like e.g. Amazon Alexa or Google Home used to control home appliances or systems etc. It is to be noted, that smart home devices are typically connected via a Wi-Fi network or other data-transmission network connected to the internet, which makes it vulnerable to hacking and other cyber risks.

The captured raw sampling signals can further e.g. comprise measuring parameters measuring the occurrence of natural catastrophes events at least comprising earthquake measuring parameters and/or windstorm measuring parameters and/or flood measuring parameters and/or weather measuring parameters. Occurring natural catastrophe events can e.g. be measured by means of measuring stations or sensors in loco and/or by satellite image processing and/or by other technical measuring processes. The measuring stations or sensors can e.g. be realized as part of the system 1. The measured sensory data of the measuring devices can be transmitted via an appropriate data transmission network to the system 1, comprising e.g. an electronic, control unit controller 16 for processing of the captured electronic data, and assigned to a historic set comprising event parameters for each assigned natural catastrophe event. To capture and measure the appropriate measured sensory data, the hardware controller or another control unit can e.g. comprise an event driven core aggregator with measuring data-driven triggers for triggering, capturing, and monitoring in the data flow pathway of the sensors and/or measuring devices of the risk-exposed and affected properties/smart homes. The sensors and/or measuring devices can, e.g., comprise technical measuring devices as e.g. seismometers or seismographs for measuring any ground motion, including seismic waves generated by earthquakes, volcanic eruptions, and other seismic sources, stream gauges in key locations across a specified region, measuring during times of flooding how high the water has risen above the gauges to determine flood levels, measuring devices for establishing wind strength, e.g. according to the Saffir-Simpson Scale, sensors for barometric pressure measurements and/or ocean temperature measurements, in particular the temperatures of ocean surface waters and thereby determining the direction a hurricane will travel and a potential hurricane's intensity (e.g., by means of floating buoys to determine the water temperature and radio transmissions back to a central system), and/or satellite image measurements estimating hurricane strength by comparing the images with physical characteristics of the hurricane.

The captured raw sampling signals can e.g. comprise measuring parameters measuring the occurrence of property perils events in dependence to neighborhood characteristics parameters and/or family composition characteristics parameters and/or building structure characteristics parameters. The captured raw sampling signals can e.g. comprise measuring parameters measuring the occurrence of perils associated with life patterns in dependence to routines characteristics parameters and/or activity/inactivity parameters and/or expected social event parameters and/or social change/forecast parameters. The captured raw sampling signals can e.g. comprise measuring parameters measuring the occurrence of home perils, the home perils being at least comprising measuring parameters related to fire perils and/or measuring parameters related to water perils and/or measuring parameters related to wind perils and/or measuring parameters related to theft perils. Finally, the captured raw sampling signals can e.g. comprise measuring parameters measuring the occurrence of smart home perils, the smart home perils being at least related to sensor-related perils and/or actuator-related perils and/or cyber perils. The individual safety score measures of the peril indexing layer can e.g. be dynamically adapted by means of the measuring and control system 1.

The measuring and control system 1 can e.g. comprise at least one processor for receiving over the communication of the hardware controller, by the at least one processor, a plurality of communications sent from a plurality of Internet-of-Things (lo T) devices on a network, the loT-devices comprise at least the plurality of sensory devices, wherein each communication describe operations of a respective loT device, wherein, by the at least one processor, based on the plurality of communications, a model structure of an operational state for at least one of the plurality of loT-devices is determined, wherein, by the at least one processor, an operational deviation of the at least one loT-device compared to the model structure is measured, and wherein, in response, an adaption of a raw sampling measuring parameter of the digital raw layer based on the operational deviation of the at least one loT device is conducted. The presence of a new loT device can e.g. be automatically detected and added to the network, wherein, by the at least one processor, the model structure is modified based on the presence of the new loT device on the network.

The peril indexing layer can e.g. further comprise representation and/or monitoring means grouping individual safety score measures and alerts monitoring. The monitoring can at least comprise environmental perils related individual safety score measures and alerts and/or property perils related individual safety score measures and alerts and/or life-style associated perils related individual safety score measures and/or cyber-perils related individual safety score measures and alerts.

The raw sampling signals can e.g. comprise at least condition data capturing risk-transfer conditions related to peril coverage parameters and/or peril exclusion parameters and/or deductibles parameters and/or claim parameters and/or time period of coverage parameters. For example, by means of the at least one processor, the operational deviation of the at least one loT device is compared to the model structure of an operational state, and, in response, at least one cost parameter value comprised in the peril coverage parameters is determined based on the operational deviation of the at least one IoT device, wherein the at least one cost parameter value relates to monetary premium parameters for conducting a risk-transfer for the peril coverage. By means of the at least one processor, a risk-transfer policy can e.g. be automatically based on the cost parameter value and a premium parameter value to be transferred in response to the operational deviation. Further, by means of the at least one processor, a signal can e.g. be transmitted to transfer a value related to the premium parameter value to an account that is associated with the coverage.

The presence of a new loT device can e.g. be automatically detected and added to the network, wherein, by the at least one processor, the model structure is modified based on the presence of the new loT device on the network. By means of the at least one processor, the risk-transfer policy can e.g. be automatically modified based on the presence of the new loT device on the network.

As a variant, the measuring and control system 1 can e.g. comprise a machine learning (ML) module, wherein the individual safety score measure for the life pattern perils is generated the step of pattern recognition of life patterns associated with measuring parameters of the captured raw sampling signals measuring comprising routines characteristics parameters and/or activity/inactivity parameters and/or expected social event parameters and/or social change/forecast parameters, and linking said life patterns to an individual safety score value by means of the machine learning (ML) module. The machine learning (ML) module can e.g. comprise at least one artificial intelligence (AI) unit. Further, the pattern recognition of life patterns can e.g. comprise a first step of clustering measured life patterns and assigning a value to the individual safety score associated with the life pattern perils based on a second step of classifying the measured and recognized clusters.

### List of reference signs

Measuring and control system for providing individual safety index for smart homes Data Store
   Modular Digital Assets/Objects Data Elements
IoT Sensory (input devices and sensors)
3 Real-world Asset or Object (Smart Home)
   31 Physical Asset
   32 Intangible Asset
   33 Living Object
      Human Being
      Animal
   34 Subsystems of the Real-world Asset or Object
      341, 342, 343,..., 34i Subsystems 1,...,i
   35 Subsystems and Components of the Ecosystem
      351, 352, 353,..., 35i Subsystems 1,...,i
4 Digital Home Object Measuring Engine
   41 Digital Intelligence Layer
      411 Machine Learning
      412 Neural Network
   Property Parameters of Real-World Asset or Object
   Status Parameters of Real-World Asset or Object
      Structural Status Parameters
      Operational Status Parameters
      Environmental Status Parameters
   Data Structures Representing States of Each of the Plurality of Subsystems of the Real-World Asset or Object
   45 Digital Peril Robot
      451 Simulation
      452 Synchronization
      453 Twin Linking: Sensory/Measuring/Data Acquisition
   46 Digital Ecosystem Replica Layer
      461, 462, 463,..., 46i Virtual Subsystems of Virtual Representation of Ecosystem
   47 Digital Home Object
      471 Simulation
      472 Synchronization
      473 Linking: Sensory/Measuring/Data Acquisition
   48 Digital Asset/Object Replica Layer
      481, 482, 483,..., 48i Virtual Subsystems of Real-World Smart Home Asset/Object
Ecosystem - Environment - Interaction between Real-world Assets/Objects

## Claims

1. Measuring and control system (1) individually measuring a multitude of perils of a property or smart home (3),
wherein the measuring and control system (1) comprises at least one hardware controller and a plurality of sensory devices,
wherein the property or smart home (3) is populated with the sensory devices and the at least one hardware controller is in communication with the plurality of sensory devices, the sensory devices transmitting sensory signals to the hardware controller,
wherein the measuring and control system (1) comprises a digital raw layer for capturing raw sampling signals comprising at least sensory data of the sensory devices and physical condition data measuring real world physical conditions related to the property,
wherein the measuring and control system (1) comprises a signal conditioning circuitry for processing the captured raw sampling signals into convertible digital values and wherein the digital raw layer provides secure retrieval of the measured and/or captured convertible digital values,
wherein the measuring and control system (1) comprises a calibration layer with a digital representation of the property (3), the digital representation of the property (3) being structured of a twinned digital peril robot (45) comprising a twinned digital ecosystem replica layer (46) comprising a twinned digital home object (47) comprising a digital asset/object replica layer, and the calibration layer comprising a first calibration structure modelling static properties parameters related to the property based on the abstract digital representation and the captured digital values of the digital raw layer, a second calibration structure modeling dynamic properties based on the abstract digital representation and the captured digital values of the digital raw layer, and a third calibration structure modeling lifestyle behavior and characteristics of the users of the property based on the abstract digital representation and the captured digital values of the digital raw layer, and
wherein the control system (1) comprises a peril indexing layer splitting the perils to be measured into various individual perils comprising at least natural catastrophes and property perils and life pattern perils and home perils and generating an individual safety score measure for each of the individual perils, wherein the captured raw sampling signals comprise measuring parameters measuring the occurrence of natural catastrophes events and the occurrence of perils associated with life patterns and the occurrence of home perils, the individual safety score measures providing indexing measures measuring the respective physical peril linked to the property (3).

2. Measuring and control system (1) measuring according to claim 1 **characterized in that** the captured raw sampling signals comprise at least sensory data transmitted to the hardware controller from the sensory devices associated with the property (3) and/or property condition data and/or perils-related condition data and/or natural catastrophe related sensory data and/or weather/air related sensory data and/or crime related monitoring data, wherein the raw sampling signals measure real world physical conditions related to the property and wherein the measuring and control system comprises a signal conditioning circuitry for processing the captured raw sampling signals into convertible digital values and providing secure retrieval of digital values.

3. Measuring and control system (1) measuring according to one of the claims 1 or 2 **characterized in that** the captured raw sampling signals comprise measuring parameters measuring the occurrence of natural catastrophes events at least comprising earthquake measuring parameters and/or windstorm measuring parameters and/or flood measuring parameters and/or weather measuring parameters.

4. Measuring and control system (1) measuring according to one of the claims 1 to 3 **characterized in that** the captured raw sampling signals comprise measuring parameters measuring the occurrence of property perils events in dependence to neighborhood characteristics parameters and/or family composition characteristics parameters and/or building structure characteristics parameters.

5. Measuring and control system (1) measuring according to one of the claims 1 to 4 **characterized in that** the captured raw sampling signals comprise measuring parameters measuring the occurrence of perils associated with life patterns in dependence to routines characteristics parameters and/or activity/inactivity parameters and/or expected social event parameters and/or social change/forecast parameters.

6. Measuring and control system (1) measuring according to one of the claims 1 to 5 **characterized in that** the captured raw sampling signals comprise measuring parameters measuring the occurrence of home perils, the home perils being at least comprising measuring parameters related to fire perils and/or measuring parameters related to water perils and/or measuring parameters related to wind perils and/or measuring parameters related to theft perils.

7. Measuring and control system (1) measuring according to one of the claims 1 to 6 **characterized in that** the captured raw sampling signals comprise measuring parameters measuring the occurrence of smart home perils, the smart home perils being at least related to sensor-related perils and/or actuator-related perils and/or cyber perils.

8. Measuring and control system (1) measuring according to one of the claims 1 to 7 **characterized in that** the measuring and control system comprises at least one processor for receiving over the communication of the hardware controller, by the at least one processor, a plurality of communications sent from a plurality of Internet-of-Things (lo T) devices on a network, the loT-devices comprise at least the plurality of sensory devices, wherein each communication describe operations of a respective loT device, wherein, by the at least one processor, based on the plurality of communications, a model structure of an operational state for at least one of the plurality of loT-devices is determined, wherein, by the at least one processor, an operational deviation of the at least one loT-device compared to the model structure is measured, and wherein, in response, an adaption of a raw sampling measuring parameter of the digital raw layer based on the operational deviation of the at least one loT device is conducted.

9. Measuring and control system (1) measuring according to claim 8 **characterized in that** the individual safety score measures of the peril indexing layer are dynamically adapted by means of the measuring and control system (1).

10. Measuring and control system (1) measuring according to one of the claims 1 to 9 **characterized in that** the measuring and control system (1) further comprises a peril indexing layer comprising representation means grouped individual safety score measures and alerts monitoring, wherein the monitoring at least comprises environmental perils related individual safety score measures and alerts and/or property perils related individual safety score measures and alerts and/or life-style associated perils related individual safety score measures and/or cyber-perils related individual safety score measures and alerts.

11. Measuring and control system (1) measuring according to one of the claims 1 to 10 **characterized in that** the raw sampling signals comprise at least condition data capturing risk-transfer conditions related to peril coverage parameters and/or peril exclusion parameters and/or deductibles parameters and/or claim parameters and/or time period of coverage parameters.

12. Measuring and control system (1) measuring according to claim 11 **characterized in that**, by means of the at least one processor, the operational deviation of the at least one loT device is compared to the model structure of an operational state, and, in response, at least one cost parameter value comprised in the peril coverage parameters is determined based on the operational deviation of the at least one loT device, wherein the at least one cost parameter value relates to monetary premium parameters for conducting a risk-transfer for the peril coverage.

13. Measuring and control system (1) measuring according to claim 12 **characterized in that**, by means of the at least one processor, a risk-transfer policy is automatically based on the cost parameter value and a premium parameter value to be transferred in response to the operational deviation.

14. Measuring and control system (1) measuring according to claim 13 **characterized in that**, by means of the at least one processor, a signal is transmitted to transfer a value related to the premium parameter value to an account that is associated with the coverage.

15. Measuring and control system (1) measuring according to one of the claims 1 to 14 **characterized in that** the presence of a new loT device is automatically detected and added to the network, wherein, by the at least one processor, the model structure is modified based on the presence of the new IoT device on the network.

16. Measuring and control system (1) measuring according to claim 15 **characterized in that**, by means of the at least one processor, the risk-transfer policy is automatically modified based on the presence of the new loT device on the network.

17. Measuring and control system (1) measuring according to one of the claims 1 to 16 **characterized in that** the measuring and control system comprises a machine learning, ML, module, wherein the individual safety score measure for the life pattern perils is generated the step of pattern recognition of life patterns associated with measuring parameters of the captured raw sampling signals measuring comprising routines characteristics parameters and/or activity /inactivity parameters and/or expected social event parameters and/or social change/forecast parameters, and linking said life patterns to an individual safety score value by means of the machine learning, ML, module.

18. Measuring and control system (1) measuring according to claim 17 **characterized in that** the machine learning, ML, module comprises at least one artificial intelligence, AI, unit.

19. Measuring and control system (1) measuring according to one of the claims 17 or 18 **characterized in that** the pattern recognition of life patterns comprises a first step of clustering measured life patterns and assigning a value to the individual safety score associated with the life pattern perils based on a second step of classifying the measured and recognized clusters.

## Patentansprüche

1. Mess- und Steuerungssystem (1), das eine Vielzahl von Gefahren eines Grundstücks oder eines Smart Homes (3) individuell misst,
wobei das Mess- und Steuerungssystem (1) mindestens einen Hardware-Controller und eine Vielzahl von Sensorvorrichtungen umfasst,
wobei das Grundstück oder das Smart Home (3) mit den Sensorvorrichtungen bevölkert ist und der mindestens eine Hardware-Controller mit der Vielzahl von Sensorvorrichtungen in Verbindung steht, wobei die Sensorvorrichtungen sensorische Signale an den Hardware-Controller übertragen,
wobei das Mess- und Steuerungssystem (1) eine digitale Rohschicht umfasst, die Rohabtastsignale erfasst, welche mindestens Sensordaten der Sensorvorrichtungen und physikalische Zustandsdaten umfassen, die reale physikalische Bedingungen im Zusammenhang mit dem Grundstück messen,
wobei das Mess- und Steuerungssystem (1) eine Signalaufbereitungsschaltung umfasst, die die erfassten Rohabtastsignale in konvertierbare digitale Werte umwandelt, und wobei die digitale Rohschicht einen sicheren Abruf der gemessenen und/oder erfassten konvertierbaren digitalen Werte bereitstellt,
wobei das Mess- und Steuerungssystem (1) eine Kalibrierungsschicht mit einer digitalen Darstellung des Grundstücks (3) umfasst, wobei die digitale Darstellung des Grundstücks (3) aus einem verzwillingten digitalen Gefahrenroboter (45) strukturiert ist, der eine verzwillingte digitale Ökosystemreplikationsschicht (46) umfasst, die ein verzwillingtes digitales Heimobjekt (47) umfasst, das eine digitale Asset/Objektreplikationsschicht umfasst, und die Kalibrierungsschicht eine erste Kalibrierungsstruktur umfasst, die statische Eigenschaftsparameter in Bezug auf das Grundstück modelliert, basierend auf der abstrakten digitalen Darstellung und den erfassten digitalen Werten der digitalen Rohschicht, eine zweite Kalibrierungsstruktur, die dynamische Eigenschaften modelliert, basierend auf der abstrakten digitalen Darstellung und den erfassten digitalen Werten der digitalen Rohschicht, und eine dritte Kalibrierungsstruktur, die das Lebensstilverhalten und die Merkmale der Benutzer des Grundstücks modelliert, basierend auf der abstrakten digitalen Darstellung und den erfassten digitalen Werten der digitalen Rohschicht, und
wobei das Steuerungssystem (1) eine Gefahrenindizierungsschicht beinhaltet, die die zu messenden Gefahren in verschiedene Einzelgefahren untergliedert - einschließlich Naturereignisse, Sachgefahren, Gefahren aus Lebensmustern und Hausgefahren, wobei die erfassten Rohabtastsignale Messparameter umfassen, die das Auftreten von Naturkatastrophenereignissen, das Auftreten von Gefahren im Zusammenhang mit Lebensmustern sowie das Auftreten von Hausgefahren messen, wobei die individuellen Sicherheitskennwerte Indizierungsgrößen liefern, welche die jeweilige physische Gefahr erfassen, die mit dem Grundstück (3) verbunden ist.

2. Mess- und Steuerungssystem (1) nach Anspruch 1, **dadurch gekennzeichnet, dass** die erfassten Rohabtastsignale mindestens Sensordaten, die von den mit dem Grundstück (3) verbundenen Sensorvorrichtungen an den Hardware-Controller übertragen werden, und/oder Grundstückszustandsdaten und/oder gefahrbezogene Zustandsdaten und/oder naturkatastrophenbezogene Sensordaten und/oder wetter-/luftbezogene Sensordaten und/oder kriminalitätsbezogene Überwachungsdaten umfassen, wobei die Rohabtastsignale reale physikalische Zustände messen, die mit dem Grundstück zusammenhängen, und wobei das Mess- und Steuerungssystem eine Signalaufbereitungsschaltung zum Verarbeiten der erfassten Rohabtastsignale in konvertierbare digitale Werte und zum Bereitstellen eines sicheren Abrufs von digitalen Werten umfasst.

3. Mess- und Steuerungssystem (1) nach einem der Ansprüche 1 oder 2, **dadurch gekennzeichnet, dass** die erfassten Rohabtastsignale Messparameter umfassen, die das Auftreten von Naturkatastrophenereignissen messen und mindestens Erdbeben-Messparameter und/oder Sturm-Messparameter und/oder Hochwasser-Messparameter und/oder Wetter-Messparameter umfassen.

4. Mess- und Steuerungssystem (1) nach einem der Ansprüche 1 bis 3, **dadurch gekennzeichnet, dass** die erfassten Rohabtastsignale Messparameter umfassen, die das Auftreten von Sachgefahrenereignissen in Abhängigkeit von Nachbarschafts-Merkmalsparametern und/oder Familienzusammensetzungs-Merkmalsparametern und/oder Gebäudestruktur-Merkmalsparametern messen.

5. Mess- und Steuerungssystem (1) nach einem der Ansprüche 1 bis 4, **dadurch gekennzeichnet, dass** die erfassten Rohabtastsignale Messparameter umfassen, die das Auftreten von mit Lebensmustern verbundenen Gefahren in Abhängigkeit von Routinen-Merkmalsparametern und/oder Aktivitäts- /Inaktivitätsparametern und/oder erwarteten sozialen Ereignisparametern und/oder sozialen Veränderungs-/Prognoseparametern messen.

6. Mess- und Steuerungssystem (1) nach einem der Ansprüche 1 bis 5, **dadurch gekennzeichnet, dass** die erfassten Rohabtastsignale Messparameter umfassen, die das Auftreten von Hausgefahren messen, wobei die Hausgefahren zumindest Messparameter in Bezug auf Feuergefahren und/oder Messparameter in Bezug auf Wassergefahren und/oder Messparameter in Bezug auf Windgefahren und/oder Messparameter in Bezug auf Diebstahlgefahren umfassen.

7. Mess- und Steuerungssystem (1) nach einem der Ansprüche 1 bis 6, **dadurch gekennzeichnet, dass** die erfassten Rohabtastsignale Messparameter umfassen, die das Auftreten von Smart-Home-Gefahren messen, wobei die Smart-Home-Gefahren zumindest sensorbezogene Gefahren und/oder aktorbezogene Gefahren und/oder Cyber-Gefahren betreffen.

8. Mess- und Steuerungssystem (1) nach einem der Ansprüche 1 bis 7, **dadurch gekennzeichnet, dass** das Mess- und Steuerungssystem mindestens einen Prozessor umfasst, um über die Kommunikation des Hardware-Controllers durch den mindestens einen Prozessor eine Vielzahl von Kommunikationen zu empfangen, die von einer Vielzahl von Internet-of-Things (loT)-Vorrichtungen in einem Netzwerk gesendet werden, wobei die loT-Vorrichtungen mindestens die Vielzahl von Sensorvorrichtungen umfassen, wobei jede Kommunikation Operationen einer jeweiligen loT-Vorrichtung beschreibt, wobei durch den mindestens einen Prozessor, basierend auf der Vielzahl von Kommunikationen, eine Modellstruktur eines Betriebszustands für mindestens eines der Vielzahl von loT-Vorrichtungen bestimmt wird, wobei durch den mindestens einen Prozessor eine Betriebsabweichung der mindestens einen loT-Vorrichtung im Vergleich zu der Modellstruktur gemessen wird, und wobei in Reaktion darauf eine Anpassung eines Rohabtastungsmessparameters der digitalen Rohschicht basierend auf der Betriebsabweichung der mindestens einen loT-Vorrichtung durchgeführt wird.

9. Mess- und Steuerungssystem (1) nach Anspruch 8, **dadurch gekennzeichnet, dass** die individuellen Sicherheitskennwerte der Gefahrenindizierungsschicht mittels des Mess- und Steuerungsystems (1) dynamisch angepasst werden.

10. Mess- und Steuerungssystem (1) nach einem der Ansprüche 1 bis 9, **dadurch gekennzeichnet, dass** das Mess- und Steuerungssystem (1) ferner eine Gefahrenindizierungsschicht umfasst, die Darstellungsmittel umfasst, die gruppierte individuelle Sicherheitskennwerte und Alarmüberwachung, wobei die Überwachung mindestens umweltgefahrenbezogene individuelle Sicherheitskennwerte und Alarme im Zusammenhang mit Umweltgefahren und/oder Sachgefahren und/oder lebensstilbezogenen Gefahren und/oder Cybergefahren umfasst.

11. Mess- und Steuerungssystem (1) nach einem der Ansprüche 1 bis 10, **dadurch gekennzeichnet, dass** die Rohabtastsignale zumindest Zustandsdaten umfassen, die Risikotransferbedingungen im Zusammenhang mit Gefahrenabdeckungsparametern und/oder Gefahrenausschlussparametern und/oder Selbstbehaltsparametern und/oder Schadenparametern und/oder Zeiträumen der Abdeckung erfassen.

12. Mess- und Steuerungssystem (1) nach Anspruch 11, **dadurch gekennzeichnet, dass** mittels des mindestens einen Prozessors die Betriebsabweichung der mindestens einen loT-Vorrichtung mit der Modellstruktur eines Betriebszustands verglichen wird und daraufhin mindestens ein in den Gefahrenabdeckungsparametern enthaltener Kostenparameterwert auf Basis der Betriebsabweichung des mindestens einen loT-Vorrichtung ermittelt wird, wobei sich der mindestens eine Kostenparameterwert auf monetäre Prämienparameter zur Durchführung eines Risikotransfers für die Gefahrenabdeckung bezieht.

13. Mess- und Steuerungssystem (1) nach Anspruch 12, **dadurch gekennzeichnet, dass** mittels des mindestens einen Prozessors automatisch eine Risikotransferpolitik auf der Grundlage des Kostenparameterwertes und eines zu übertragenden Prämienparameterwertes in Reaktion auf die Betriebsabweichung erstellt wird.

14. Mess- und Steuerungssystem (1) nach Anspruch 13, **dadurch gekennzeichnet, dass** mittels des mindestens einen Prozessors ein Signal übertragen wird, um einen auf den Prämienparameterwert bezogenen Wert auf ein Konto zu übertragen, das mit der Abdeckung verbunden ist.

15. Mess- und Steuerungssystem (1) nach einem der Ansprüche 1 bis 14, **dadurch gekennzeichnet, dass** das Vorhandensein einer neuen loT-Vorrichtung automatisch erkannt und dem Netzwerk hinzugefügt wird, wobei durch den mindestens einen Prozessor die Modellstruktur basierend auf dem Vorhandensein der neuen loT-Vorrichtung im Netzwerk modifiziert wird.

16. Mess- und Steuerungssystem (1) nach Anspruch 15, **dadurch gekennzeichnet, dass** mittels des mindestens einen Prozessors die Risikotransferpolitik automatisch auf der Grundlage des Vorhandenseins der neuen loT-Vorrichtung im Netzwerk geändert wird.

17. Mess- und Steuerungssystem (1) nach einem der Ansprüche 1 bis 16, **dadurch gekennzeichnet, dass** das Mess- und Steuerungssystem ein Modul für maschinelles Lernen (ML) umfasst, wobei die individuellen Sicherheitskennwerte für die Lebensmustergefahren durch den Schritt der Mustererkennung von Lebensmustern erzeugt wird, die mit Messparametern der erfassten Rohabtastsignale verbunden sind, die Routinen-Merkmalsparameter und/oder Aktivitäts-/Inaktivitätsparameter und/oder erwartete soziale Ereignisparameter und/oder soziale Veränderungs- /Vorhersageparameter umfassen, und die Lebensmuster mit einem individuellen Sicherheitsscore-Wert mittels des Moduls für maschinelles Lernen (ML) verknüpft werden.

18. Mess- und Steuerungssystem (1) nach Anspruch 17, **dadurch gekennzeichnet, dass** das Modul für maschinelles Lernen (ML) mindestens eine Künstliche-Intelligenz-(Kl)-Einheit umfasst.

19. Mess- und Steuerungssystem (1) nach einem der Ansprüche 17 oder 18, **dadurch gekennzeichnet, dass** die Mustererkennung von Lebensmustern einen ersten Schritt des Clusterns von gemessenen Lebensmustern und die Zuweisung eines Wertes zu den individuellen Sicherheitskennwerten, die den Lebensmustergefahren zugeordnet sind, basierend auf einem zweiten Schritt der Klassifizierung der gemessenen und erkannten Cluster umfasst.

## Revendications

1. Système de mesure et de contrôle (1) mesurant individuellement une multitude de périls d'un bien immobilier ou d'une maison intelligente (3),
dans lequel le système de mesure et de contrôle (1) comprend au moins un contrôleur matériel et une pluralité de dispositifs sensoriels,
dans lequel la propriété ou la maison intelligente (3) est peuplée de dispositifs sensoriels et le ou les contrôleurs matériels sont en communication avec la pluralité de dispositifs sensoriels, les dispositifs sensoriels transmettant des signaux sensoriels au contrôleur matériel,
dans lequel le système de mesure et de contrôle (1) comprend une couche brute numérique pour capturer des signaux d'échantillonnage bruts comprenant au moins des données sensorielles des dispositifs sensoriels et des données d'état physique mesurant des conditions physiques réelles liées à la propriété,
dans lequel le système de mesure et de contrôle (1) comprend un circuit de conditionnement de signal pour traiter les signaux d'échantillonnage bruts capturés en valeurs numériques convertibles et dans lequel la couche brute numérique permet une récupération sécurisée des valeurs numériques convertibles mesurées et/ou capturées,
dans lequel le système de mesure et de contrôle (1) comprend une couche d'étalonnage avec une représentation numérique de la propriété (3), la représentation numérique de la propriété (3) étant structurée d'un robot de péril numérique jumelé (45) comprenant une couche de réplique d'écosystème numérique jumelée (46) comprenant un objet domestique numérique jumelé (47) comprenant une couche de réplique d'actif numérique/objet, et la couche d'étalonnage comprenant une première structure d'étalonnage modélisant les paramètres de propriétés statiques liés à la propriété sur la base de la représentation numérique abstraite et des valeurs numériques capturées de la couche brute numérique, une seconde structure d'étalonnage modélisant les propriétés dynamiques basées sur la représentation numérique abstraite et les valeurs numériques capturées de la couche brute numérique, et une troisième structure d'étalonnage modélisant le mode de vie, le comportement et les caractéristiques des utilisateurs de la propriété sur la base de la représentation numérique abstraite et des valeurs numériques capturées de la couche brute numérique, et
dans lequel le système de commande (1) comprend une couche d'indexation des périls divisant les dangers à mesurer en divers périls individuels comprenant au moins des catastrophes naturelles et des périls contre les biens, des périls liés à la vie et des périls domestiques et générant une mesure de score de sécurité individuelle pour chacun des risques individuels, dans lequel les signaux d'échantillonnage bruts capturés comprennent des paramètres de mesure mesurant la survenance des événements de catastrophes naturelles et la survenance des périls associés à la vie et l'occurrence des risques domestiques, les mesures individuelles du score de sécurité fournissant des mesures d'indexation mesurant le risque physique respectif lié à la propriété (3).

2. Système de mesure et de contrôle (1) de mesure selon la revendication 1, **caractérisé en ce que** les signaux d'échantillonnage bruts capturés comprennent au moins des données sensorielles transmises au contrôleur matériel à partir des dispositifs sensoriels associés à la propriété (3) et/ou des données d'état de propriété et/ou des données d'état liées à des risques et/ou des données sensorielles liées à des catastrophes naturelles et/ou des données sensorielles liées au temps/air et/ou des données de surveillance liées à la criminalité, dans lequel les signaux d'échantillonnage bruts mesurent les conditions physiques du monde réel liées à la propriété et dans lequel le système de mesure et de contrôle comprend un circuit de conditionnement de signal pour traiter les signaux d'échantillonnage bruts capturés en valeurs numériques convertibles et fournir une récupération sécurisée des valeurs numériques.

3. Système de mesure et de contrôle (1), mesurant selon l'une des revendications 1 ou 2, **caractérisé en ce que** les signaux bruts d'échantillonnage capturés comportent des paramètres de mesure de la survenue d'événements de catastrophes naturelles, comprenant au moins des paramètres de mesure de tremblement de terre et/ou de tempête de vent et/ou de mesure d'inondation et/ou de météorologie.

4. Système de mesure et de contrôle (1), mesurant selon l'une des revendications 1 à 3, **caractérisé en ce que** les signaux bruts d'échantillonnage capturés comprennent des paramètres de mesure de la survenue de périls immobiliers, d'événements en fonction des caractéristiques du voisinage et/ou de la composition familiale, des paramètres et/ou des caractéristiques de la structure du bâtiment.

5. Système de mesure et de contrôle (1), mesurant selon l'une des revendications 1 à 4, **caractérisé en ce que** les signaux d'échantillonnage bruts capturés comprennent des paramètres de mesure de l'occurrence de périls associés à des modes de vie en dépendance à des routines, des caractéristiques, des paramètres et/ou des paramètres d'activité/d'inactivité et/ou des paramètres d'événements sociaux attendus et/ou des paramètres de changement social/de prévision.

6. Système de mesure et de contrôle (1) mesurant selon l'une des revendications 1 à 5, **caractérisé en ce que** les signaux bruts d'échantillonnage capturés comportent des paramètres de mesure de la survenance de risques domestiques, les risques domestiques comportant au moins des paramètres de mesure liés aux risques d'incendie et/ou des paramètres de mesure liés aux périls d'eau et/ou des paramètres de mesure liés aux risques de vent et/ou des paramètres de mesure liés aux dangers de vol.

7. Système de mesure et de contrôle (1) mesurant selon l'une des revendications 1 à 6, **caractérisé en ce que** les signaux bruts d'échantillonnage capturés comprennent des paramètres de mesure de l'occurrence de périls de maison intelligente, les dangers de la maison intelligente étant au moins liés à des périls liés à des capteurs et/ou à des périls liés à des actionneurs et/ou à des cyber-périls.

8. Système de mesure et de contrôle (1) mesurant selon l'une des revendications 1 à 7, **caractérisé en ce que** le système de mesure et de contrôle comprend au moins un processeur pour recevoir sur la communication du contrôleur matériel, par le ou les processeurs, une pluralité de communications envoyées à partir d'une pluralité de dispositifs de l'Internet des objets (Io-T) sur un réseau, les dispositifs loT comprennent au moins la pluralité de dispositifs sensoriels, dans lesquels chaque communication décrit les opérations d'un dispositif loT respectif, dans lequel, par le ou les processeurs, sur la base de la pluralité des communications, une structure modèle d'un état opérationnel pour au moins un de la pluralité de dispositifs loT est déterminée, dans laquelle, par le au moins un processeur, un écart de fonctionnement du ou des dispositifs loT par rapport à la structure du modèle est mesuré, et dans lequel, en réponse, une adaptation d'un paramètre de mesure d'échantillonnage brut de la couche brute numérique basée sur l'écart opérationnel du ou des dispositifs loT est effectuée.

9. Système de mesure et de contrôle (1), mesure selon la revendication 8, **caractérisé en ce que** les mesures individuelles du score de sécurité de la couche d'indexation des périls sont adaptées dynamiquement au moyen du système de mesure et de contrôle (1).

10. Système de mesure et de contrôle (1) mesurant selon l'une des revendications 1 à 9, **caractérisé en ce que** le système de mesure et de contrôle (1) comprend en outre une couche d'indexation de péril comprenant des moyens de représentation, des mesures de score de sécurité individuelles groupées et des alertes, la surveillance comprenant au moins des mesures de score de sécurité individuel liées à des risques environnementaux et/ou des mesures de score de sécurité individuel et des alertes liées à des dangers environnementaux et/ou des mesures de score de sécurité individuelles et des alertes associées à des dangers de biens et/ou un mode de vie associé Mesures individuelles du score de sécurité liées aux risques et/ou mesures et alertes individuelles liées aux cyberpérils.

11. Système de mesure et de contrôle (1) mesurant selon l'une des revendications 1 à 10, **caractérisé en ce que** les signaux bruts d'échantillonnage comprennent au moins des données de condition capturant des conditions de transfert de risque liées aux paramètres de couverture des risques et/ou aux paramètres d'exclusion des risques et/ou aux paramètres de franchises et/ou aux paramètres de réclamation et/ou aux paramètres de durée de la couverture.

12. Système de mesure et de contrôle (1) mesurant selon la revendication 11, **caractérisé en ce que**, au moyen du ou des processeurs, l'écart de fonctionnement du ou des dispositifs loT est comparé à la structure du modèle d'un état de fonctionnement et, en réponse, la valeur d'au moins un paramètre de coût comprise dans les paramètres de couverture du risque est déterminée sur la base de l'écart de fonctionnement du ou des dispositifs loT, dans lequel la valeur d'au moins un paramètre de coût se rapporte à des paramètres de prime monétaire pour effectuer un transfert de risque pour la couverture du risque.

13. Système de mesure et de contrôle (1) de mesure selon la revendication 12, **caractérisé en ce que**, au moyen d'au moins un processeur, une politique de transfert de risque est automatiquement basée sur la valeur du paramètre de coût et une valeur de paramètre de prime à transférer en réponse à l'écart de fonctionnement.

14. Système de mesure et de contrôle (1) de mesure selon la revendication 13, **caractérisé en ce que**, au moyen du ou des processeurs, un signal est transmis pour transférer une valeur liée à la valeur du paramètre premium à un compte associé à la couverture.

15. Système de mesure et de contrôle (1) mesurant selon l'une des revendications 1 à 14, **caractérisé en ce que** la présence d'un nouveau dispositif loT est automatiquement détectée et ajoutée au réseau, dans lequel, par le ou les processeurs, la structure du modèle est modifiée en fonction de la présence du nouveau dispositif loT sur le réseau.

16. Système de mesure et de contrôle (1) de mesure selon la revendication 15, **caractérisé en ce que**, au moyen d'au moins un processeur, la politique de transfert de risque est automatiquement modifiée en fonction de la présence du nouveau dispositif loT sur le réseau.

17. Système de mesure et de contrôle (1) mesurant selon l'une des revendications 1 à 16, **caractérisé en ce que** le système de mesure et de contrôle comprend un module d'apprentissage automatique, ML, dans lequel est générée la mesure individuelle du score de sécurité pour les périls du schéma de vie, l'étape de reconnaissance des modèles de vie associée à la mesure des paramètres des signaux d'échantillonnage bruts capturés, comprenant les routines, les caractéristiques, les paramètres et/ou les paramètres d'activité/inactivité et/ou attendus paramètres d'événements sociaux et/ou de changements sociaux/paramètres de prévision, et en reliant ces modèles de vie à une valeur de score de sécurité individuelle au moyen du module d'apprentissage automatique, ML.

18. Système de mesure et de contrôle (1) de mesure selon la revendication 17, **caractérisé en ce que** le module d'apprentissage automatique, ML, comprend au moins une unité d'intelligence artificielle, IA.

19. Système de mesure et de contrôle (1), mesurant selon l'une des revendications 17 ou 18, **caractérisé en ce que** la reconnaissance des profils de vie comprend une première étape de regroupement des modèles de vie mesurés et d'attribution d'une valeur au score de sécurité individuel associé aux périls de la durée de vie, sur la base d'une seconde étape de classification des groupes mesurés et reconnus.
